# EUROPEAN PATENT SPECIFICATION

(11) **EP 4 011 742 B1**
(45) Date of publication and mention of the grant of the patent: **26.03.2025**
(21) Application number: 20853049.3
(22) Date of filing: 19.06.2020
(51) Int. Cl.: B61F 5/08, B61F 5/10, B61F 5/38, F16F 1/38, F16F 1/387, F16F 1/40, F16F 9/04

(54) **BOGIE FOR RAILWAY VEHICLE**
DREHGESTELL FÜR SCHIENENFAHRZEUG
BOGIE POUR VÉHICULE FERROVIAIRE

(30) Priority: 09.08.2019 JP 2019147099
(43) Date of publication of application: 15.06.2022
(73) Proprietor: Hitachi, Ltd., Chiyoda-ku Tokyo 100-8280 (JP)
(72) Inventor: GOUDA, Kenjirou, Tokyo 100-8280 (JP); HIDAI, Masataka, Tokyo 100-8280 (JP); IWASAKI, Katuyuki, Tokyo 100-8280 (JP); WATANABE, Takao, Tokyo 100-8280 (JP)
(74) Representative: Mewburn Ellis LLP
(86) International application number: PCT/JP2020/024097
(87) International publication number: WO 2021/029139

(56) References cited:
- DE-T5- 112013 007 135
- FR-A1- 2 001 509
- JP-A- 2010 151 181
- JP-A- 2011 002 000
- JP-A- 2013 241 990
- JP-A- H0 911 898
- JP-A- H10 246 265
- US-A1- 2016 252 153
- US-A1- 2018 290 668

## Description

### Technical Field

The present invention relates to a bogie for a railway vehicle and can be suitably applied to a bogie for a railway vehicle that supports the vehicle body of a railway vehicle.

### Background Art

When a railway vehicle travels on a curve, a horizontal pressure in the left-and-right direction is generated between wheels and rails. When a remarkable horizontal pressure occurs, there is a possibility that the wear of the wheels and the rails is promoted and vibration and noise due to the creaking between the wheels and the rails are generated, causing track destruction or derailment. Therefore, from the viewpoint of reducing maintenance costs of wheels and rails, ensuring comfort, ensuring safety, and the like, it is required to reduce the horizontal pressure and improve curve passing performance.

In order to respond to the above-described demand, when a railway vehicle passes through a curve, it is necessary to reduce the horizontal pressure by allowing the railway vehicle to smoothly travel so as to follow the change of the curve while directing a wheel set and a bogie to the tangential direction of the curve and to allow the railway vehicle to travel in a state where the load on the track is reduced.

Here, as a bogie for a railway vehicle capable of reducing the horizontal pressure when passing through a curve, there is a steering bogie for a railway vehicle disclosed in, for example,

Patent Literature 1. In the steering bogie for a railway vehicle disclosed in Patent Literature 1, a steering device for moving an axle along a curved path is attached to an accompanying shaft that is not driven by a main motor, so that the steering device can be provided while a driving/control device is mounted to a driving shaft in the same manner as in an ordinary bogie for a railway vehicle, and thus it can be expected to improve the curve passing performance.

### Citation List

### Patent Literature

[Patent Literature 1] Japanese Patent No. 5512108 US 2016/252153 A1, JP H10 246265 A, JP 2013 241990 A and JP 2011 002000 A all relate to similar suspension means for rail vehicles.

### Summary of Invention

### Technical Problem

However, in the above-described steering bogie for a railway vehicle of Patent Literature **1,** since it is necessary to steer a wheel set along a curve by a link mechanism, there is a problem that it is difficult to avoid a complicated mechanism and the mass of the bogie is increased due to such a link mechanism. In addition, since the link mechanism is connected to an axle box that is a component under the spring with large vibration, when vibration with a large amplitude is transmitted from a track, there is a risk that the load on the link mechanism increases to cause looseness in the link mechanism and a mechanism for steering is not normally operated.

The present invention has been made in consideration of the above points, and an object thereof is to propose a bogie for a railway vehicle that can reduce a horizontal pressure generated in the left-and-right direction between wheels and rails by improving curve passing performance while suppressing the overall mass by a simple mechanism and configuration and is less affected by vibration from a track.

### Solution to Problem

According to the present invention to solve the problems, provided is a bogie with the technical features of claim 1.

### Advantageous Effects of Invention

According to the present invention, it is possible to provide a bogie for a railway vehicle that can reduce a horizontal pressure generated in the left-and-right direction between wheels and rails even with a simple mechanism and configuration and is less affected by vibration from a track.

### Brief Description of Drawings

FIG. 1 is a diagram for showing a structural example of a bogie for a railway vehicle according to a first embodiment of the present invention.
FIG. 2 is a diagram for showing a detailed structural example of an air spring of a bogie not in accordance with the invention.
FIG. 3 is a diagram for explaining force-displacement characteristics of an elastic element not in accordance with the invention.
FIG. 4 is a diagram for showing a structural example (part 1) of another form of an elastic element for a bogie not in accordance with the invention.
FIG. 5 is a diagram for showing a structural example (part 2) of the elastic element in the first embodiment.
FIG. 6 is a diagram for explaining an operation status when the bogie for a railway vehicle according to the first embodiment passes through a sharp curve.
FIG. 7 is a diagram for explaining an operation status when a conventional bogie for a railway vehicle passes through a sharp curve.
FIG. 8 is a diagram for showing a structural example of another form of the bogie for a railway vehicle not in accordance with the invention.
FIG. 9 is a diagram for showing a structural example of an elastic element of a bogie for a railway vehicle not in accordance with the claimed invention.

### Description of Embodiments

Hereinafter, embodiments of the present invention will be described in detail with reference to the drawings.

### (1) First Embodiment

### (1-1) Configuration of bogie for railway vehicle

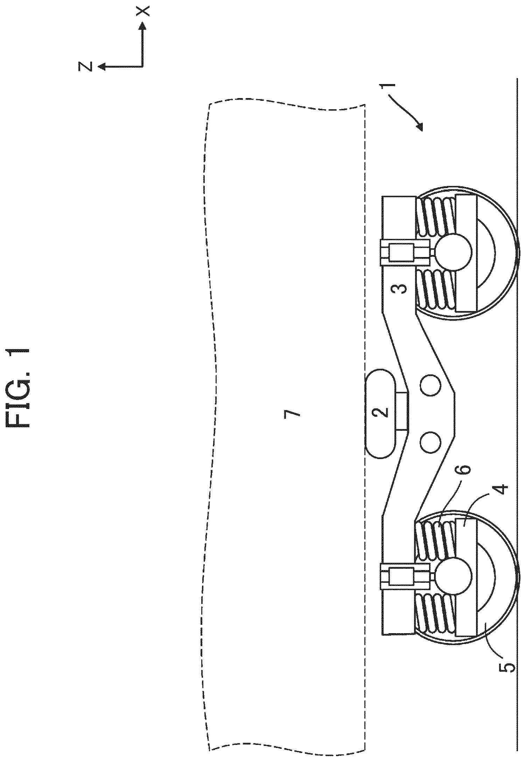

FIG. 1 is a diagram for showing a structural example of a bogie for a railway vehicle according to a first embodiment of the present invention.

As shown in FIG. 1, a bogie for a railway vehicle 1 according to the embodiment mainly includes air springs 2, a bogie frame 3, an axle box 4, a wheel set 5, and an axle spring 6. In the bogie for a railway vehicle 1, the wheel set 5 is rotatably supported by the axle box 4 through a bearing, and a portion between the axle box 4 and the bogie frame 3 is elastically supported by the axle spring 6. In addition, a portion between a vehicle body 7 and the bogie frame 3 (between the vehicle body and the bogie) is elastically supported by the air springs 2, and a pair of left and right air springs 2 is arranged at the bogie frame 3.

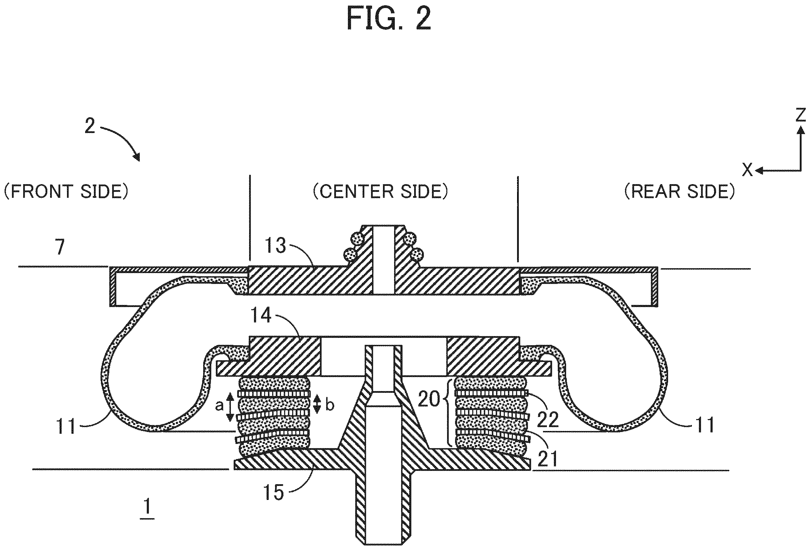

FIG. 2 is a diagram for showing a detailed structural example of the air spring of a bogie not in accordance with the claimed invention.

As shown in FIG. 2, the air spring 2 mainly includes a diaphragm 11, a top plate 13, a bottom plate 14, a base plate 15, and an elastic element 20. In the air spring 2, the diaphragm 11 is arranged to be connected to the top plate 13 and the bottom plate 14, and elastically supports between the top plate 13 and the bottom plate 14 in the up-and-down direction and the horizontal direction. In addition, the elastic element 20 is arranged between the bottom plate 14 and the base plate 15, and elastically supports between the bottom plate 14 and the base plate 15 in the up-and-down direction and the horizontal direction.

As shown in FIG. 2, the elastic element 20 has a configuration in which a plurality of elastic bodies 21 and a plurality of plates 22 are stacked and arranged in the up-and-down direction. The elastic bodies 21 are, for example, elastic bodies such as rubber. In addition, as shown in FIG. 2, the elastic element 20 is arranged so as to be opened to the front side or the rear side and the center side with respect to the traveling direction (X-axis direction) of the railway vehicle. In the elastic element 20 thus configured, the elastic bodies 21 are elastically deformed while being compressed or extended in the vertical direction of the plates 22 when the air spring 2 is displaced in the up-and-down direction, and are elastically deformed in the shearing direction of the plates 22 when the air spring 2 is displaced in the horizontal direction. In the elastic bodies 21 having such a configuration, when the displacement where the air spring 2 is compressed in the vertical direction is large, the reaction force of the elastic bodies 21 in the vertical direction is significantly increased, while when the displacement of the air spring 2 in the horizontal direction is large, the reaction force of the elastic bodies 21 in the horizontal direction is not significantly increased as compared with the reaction force in the vertical direction. Therefore, in the elastic element 20, the spring constant in the horizontal direction can be made relatively smaller than the spring constant in the vertical direction, and in particular, the spring constant in the longitudinal direction can be made relatively smaller than the spring constant in the vertical direction in consideration of the structure of the elastic element 20. Such an elastic element 20 will be described in detail below.

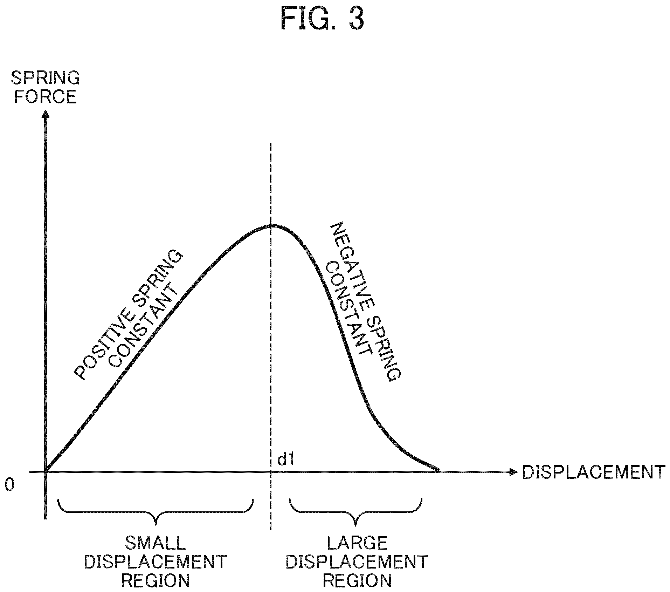

FIG. 3 is a diagram for explaining force-displacement characteristics of an elastic element not in accordance with the claimed invention. **FIG.** 3 shows a relationship (force-displacement characteristics) between the displacement of the elastic element 20 in the horizontal direction (the amount of deformation in the horizontal direction compressed or extended from the normal state) and the spring force of the elastic element 20 in the horizontal direction (the restoring force acting in the horizontal direction).

As shown in FIG. 3, the elastic element 20 has a characteristic of having a "positive spring constant" in which the spring force increases with an increase in the displacement when the displacement in the horizontal direction is smaller than a predetermined amount (when the displacement in the horizontal direction is in a "small displacement region" equal to or smaller than d1) and having a "negative spring constant" in which the spring force decreases with an increase in the displacement when the displacement in the horizontal direction is larger than the predetermined amount (when the displacement in the horizontal direction is in a "large displacement region" exceeding d1). That is, the elastic element 20 has a characteristic of "having a negative spring constant in which the absolute value of the spring force decreases with an increase in the displacement when being deformed in the longitudinal direction by more than the predetermined amount". Since the elastic element 20 has the force-displacement characteristics as described above, the restoring force for returning the displacement to zero (0) increases with an increase in the displacement while the horizontal displacement falls within the small displacement region, but the restoring force for returning the displacement to zero (0) decreases when the horizontal displacement deforms to the large displacement region.

Then, in the air spring 2 of the bogie for a railway vehicle 1 according to the embodiment, as shown in FIG. **2****, in** the elastic element 20 arranged so as to be opened to the front side or the rear side and the center side with respect to the traveling direction (X-axis direction) of the railway vehicle, the width a of the opening portion on the outer side (the front side or the rear side) of the elastic bodes 21 is formed to be wider than the width b of the opening portion on the inner side (the center side). By configuring the elastic element 20 in this manner, the capacity of the elastic bodies 21 increases, and the surface area where the elastic bodies 21 are not restrained increases, so that the deformation of the elastic bodies 21 in the horizontal direction (particularly in the longitudinal direction) is hardly restrained, and the deformation force can be easily released. As a result, the spring constant of the elastic element 20 in the horizontal direction (particularly in the longitudinal direction) can be made smaller than the spring constant in the vertical direction.

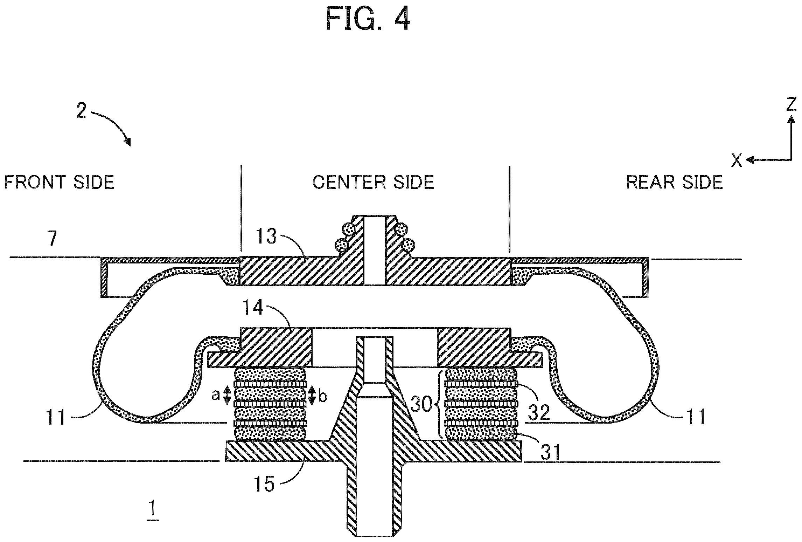

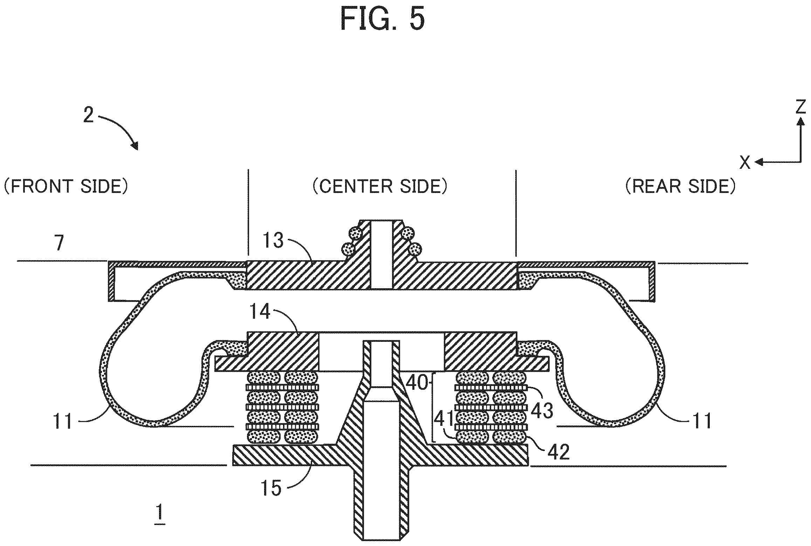

It should be noted that the elastic element provided in the air spring 2 is not limited to the elastic element 20 shown in FIG. 2 in the embodiment, but may be configured as, for example, an elastic element 30 shown in FIG. 4 and an elastic element 40 shown in FIG. 5 shown below.

FIG. 4 is a diagram for showing a structural example (part 1) of another form of an elastic element not in accordance with the claimed invention. FIG. 4 shows a detailed structure of the air spring 2 including the elastic element 30.

As shown in FIG. 4, the elastic element 30 has a configuration in which a plurality of elastic bodies 31 and a plurality of plates 32 are stacked and arranged in the up-and-down direction. The elastic bodies 31 are, for example, elastic bodies such as rubber as similar to the elastic bodies 21. In the air spring 2 of FIG. 4, the elastic element 30 is arranged so as to be opened to the front side or the rear side and the center side with respect to the traveling direction (X-axis direction) of the railway vehicle, and the elastic bodes 31 and the plates 32 are arranged in parallel so that the width a of the opening portion on the outer side (the front side or the rear side) of the elastic bodies 31 and the width b of the opening portion on the inner side (center side) are the same (or substantially the same). In the elastic element 30 thus configured, by using elastic bodies of a material having a negative spring constant in the case of a large displacement as shown in FIG. 3 for the elastic bodies 31, it becomes easy to deform to the large displacement region as similar to the elastic element 20 of FIG. 2, and the spring constant of the elastic bodies 31 in the horizontal direction (particularly in the longitudinal direction) can be made smaller than the spring constant in the vertical direction.

FIG. 5 is a diagram for showing a structural example (part 2) of another form of the elastic element in the first embodiment. FIG. 5 shows a detailed structure of the air spring 2 including the elastic element 40.

As shown in FIG. 5, the elastic element 40 has a configuration in which a plurality of elastic bodies 41 and a plurality of elastic bodies 42 are stacked and arranged in the up-and-down direction between a plurality of plates 43. In addition, elastic bodies of materials having different spring constants are used for the elastic bodes 41 and the elastic bodies 42, and the spring constant of the material used for the elastic bodies 41 is larger than that of the material used for the elastic bodes 42. In the elastic element 40 thus configured, the combination of the elastic bodies 42 having a small spring constant and the elastic bodies 41 having a large spring constant has an advantage that the spring constant can be easily adjusted in the vertical direction and the horizontal direction of the elastic element 40. Specifically, as shown in FIG. 5, the elastic element 40 is arranged so as to be opened to the front side or the rear side and the center side with respect to the traveling direction (X-axis direction) of the railway vehicle, and the elastic body 42 having a small spring constant in the longitudinal direction is arranged on the outer side (the front side or the rear side) and the elastic body 41 having a large spring constant in the longitudinal direction is arranged on the inner side (center side) in the same layer between the plates 43. With this configuration, the elastic element 40 can obtain the same effect as the elastic element 20 of FIG. 2 and the elastic element 30 of FIG. 4 because the spring constant and the restoring force in the horizontal direction (particularly in the longitudinal direction) can be made smaller than those in the vertical direction.

The configuration of the bogie for a railway vehicle 1 according to the embodiment has been described above.

### (1-2) Operation of bogie for railway vehicle

Next, how the bogie for a railway vehicle 1 according to the embodiment operates when the railway vehicle travels will be described in detail for each traveling status.

### (1-2-1) When passing through straight line and gentle curve

First, when the bogie for a railway vehicle 1 passes through a straight line or a gentle curve, the horizontal displacement and the longitudinal displacement of the elastic element (although the elastic element 20 is used in the following description, the above-described elastic elements 30 and 40 may be used) of the air spring 2 are small. In other words, the displacement of the elastic element 20 falls within the small displacement region shown in FIG. 3. Therefore, the elastic element 20 elastically supports a portion between the vehicle body and the bogie with a positive spring constant, reduces vibration transmission between the vehicle body and the bogie, and maintains a comfortable riding condition.

### (1-2-2) When passing through curve

Next, when the bogie for a railway vehicle 1 passes through a curve (other than a gentle curve), the horizontal displacement and the longitudinal displacement of the elastic elements 20 in the pair of air springs 2 arranged in the left-and-right direction become large. In particular, when the bogie for a railway vehicle 1 passes through a sharp curve having a small radius of curvature, the longitudinal displacement of the elastic element 20 becomes large and displaces to the large displacement region shown in FIG. 3.

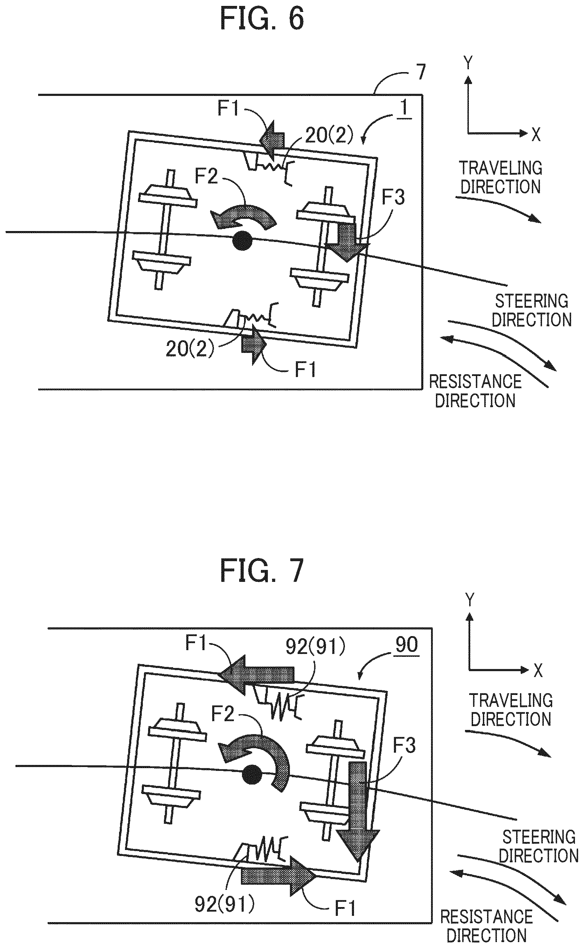

FIG. 6 is a diagram for explaining an operation status when the bogie for a railway vehicle according to the first embodiment passes through a sharp curve. In addition, FIG. 7 is exemplified for comparison with FIG. 6. FIG. 7 is a diagram for explaining an operation status when a conventional bogie for a railway vehicle passes through a sharp curve. In FIG. 7, a bogie for a railway vehicle 90 is shown as an example of the prior art, the bogie for a railway vehicle 90 has a pair of air springs 91 arranged in the left-and-right direction, and each air spring 91 has an elastic element 92 for elastically supporting a portion between the vehicle body and the bogie. However, it is assumed that the elastic elements 92 shown in FIG. 7 do not have the characteristic of "having a negative spring constant in which the absolute value of the spring force decreases with an increase in the displacement when being deformed in the longitudinal direction by more than the predetermined amount" as the elastic element 20 and the like according to the embodiment, and have a positive spring constant in which the absolute value of the spring force increases with an increase in the displacement within the elastic limit as a characteristic of a general elastic body.

First, a force applied to the conventional bogie for a railway vehicle 90 when passing through a sharp curve will be described with reference to FIG. 7. FIG. 7 shows a state where the bogie for a railway vehicle 90 is traveling on a sharp right curve. In the state of FIG. 7, the longitudinal displacement of the elastic elements 92 of the air springs 91 becomes large, and at this time, a "restoring force F1 in the longitudinal direction" in each elastic element 92 of the pair of air springs 91 becomes large due to the positive spring constant based on the above-described characteristic of the elastic element 92. Then, the restoring force F1 in the longitudinal direction of each of these two elastic elements 92 generates a "turning resistance moment F2" that tries to return to the neutral position around the center of the bogie in the resistance direction of the yawing direction. At this time, since the restoring force F1 in the longitudinal direction is large, the turning resistance moment F2 also becomes large. As a result, in the case of FIG. 7, a horizontal pressure F3 that generates a yaw moment in the steering direction against the turning resistance moment F2 also becomes large.

As described above, in the case of the conventional bogie for a railway vehicle 90, since the remarkable horizontal pressure F3 occurs when passing through a sharp curve, damage to the track is large, and there is a possibility that the wear of the wheels and the rails is promoted and vibration and noise due to the creaking between the wheels and the rails are generated, causing track destruction or derailment.

On the other hand, the bogie for a railway vehicle 1 according to the embodiment can reduce the horizontal pressure F3 when passing through a curve. Hereinafter, a force applied to the bogie for a railway vehicle 1 when passing through a sharp curve will be described with reference to FIG. 6.

FIG. 6 shows a state where the bogie for a railway vehicle 1 is traveling on a sharp right curve as similar to FIG. 7. In the state of FIG. 6, since the longitudinal displacement of the elastic elements 20 of the air springs 2 of the bogie for a railway vehicle 1 displaces to the large displacement region, the "restoring force F1 in the longitudinal direction" in each elastic element 20 of the pair of air springs 2 becomes small due to the negative spring constant (see FIG. 3) based on the characteristic of the elastic element 20 according to the embodiment. Then, the restoring force F1 in the longitudinal direction of each of these two elastic elements 20 generates the "turning resistance moment F2" that tries to return to the neutral position around the center of the bogie in the resistance direction of the yawing direction. However, since the restoring force F1 in the longitudinal direction of each elastic element 20 in this state is smaller than the restoring force F1 in FIG. 7, the turning resistance moment F2 also becomes smaller than that in FIG. 7. As a result, in the bogie for a railway vehicle 1 according to the embodiment of FIG. 6, the horizontal pressure F3 that generates a yaw moment in the steering direction against the turning resistance moment F2 becomes smaller than that in the conventional bogie for a railway vehicle 90 exemplified in FIG. 7.

### (1-2-3) When returning to straight line after passing through curve

Next, when the bogie for a railway vehicle 1 returns to the straight line after passing through the curve, the relative yaw angle between the vehicle body and the bogie is forcibly returned to zero by the displacement restraint of the track, and thus the bogie for a railway vehicle 1 returns to the original neutral position. As a result, the displacement in the longitudinal direction of the elastic element 20 also returns to the original neutral position and falls within the small displacement region. Therefore, the elastic element 20 elastically supports a portion between the vehicle body and the bogie with a positive spring constant, reduces vibration transmission between the vehicle body and the bogie, and maintains a comfortable riding condition.

As described above, in the bogie for a railway vehicle 1 according to the embodiment, the horizontal pressure F3 acting in the left-and-right direction with respect to the wheels and the rails can be reduced by reducing the turning resistance moment F2 generated by the air spring 2 (the elastic element 20) between the vehicle body and the bogie when passing through a curve so that damage to the track can be reduced.

In addition, in the bogie for a railway vehicle 1 according to the embodiment, when entering a curve from a straight line, the bogie (more specifically, corresponding to the configuration below the air spring 2 of the bogie for a railway vehicle 1 in FIG. 1 and the same applies hereinafter) is forcibly and angularly displaced in the yaw direction with respect to the vehicle body 7 while being restrained in accordance with a change in the track, and accordingly, the air spring 2 is largely displaced in the longitudinal direction from the neutral position to the large displacement region through the small displacement region. That is, in the embodiment, the bogie can reliably and accurately displace in the yaw direction and the air spring 2 can displace in the longitudinal direction in accordance with a change in the track entering a curve from a straight line.

Further, in the bogie for a railway vehicle 1 according to the embodiment, when returning to a straight line after traveling on a curve, the bogie is forcibly and angularly displaced in the yaw direction with respect to the vehicle body 7 and returned to the neutral position while being restrained in accordance with a change in the track, and the displacement of the air spring 2 is accordingly returned to the neutral position from the large displacement region through the small displacement region in the longitudinal direction. That is, in the embodiment, the bogie can reliably and accurately return to the neutral position in the yaw direction and the air spring 2 can return to the neutral position in the longitudinal direction in accordance with a change in the track.

In general, an elastic element having a negative spring constant has a disadvantage in that it is difficult to restore to a neutral state, but since the bogie and the air spring 2 are forcibly displaced by the restraint of the track as described above in the bogie for a railway vehicle 1 according to the embodiment, even the elastic element 20 (or the elastic elements 30 and 40) having a negative spring constant can return to a neutral state.

As can be seen from the operation for each traveling status as described above, according to the bogie for a railway vehicle 1 according to the embodiment, the horizontal pressure generated in the left-and-right direction between the wheels and the rails can be reduced by improving the curve passing performance while suppressing the overall mass by the simple mechanism and configuration, and the effect of being less affected by vibration from the track can be obtained.

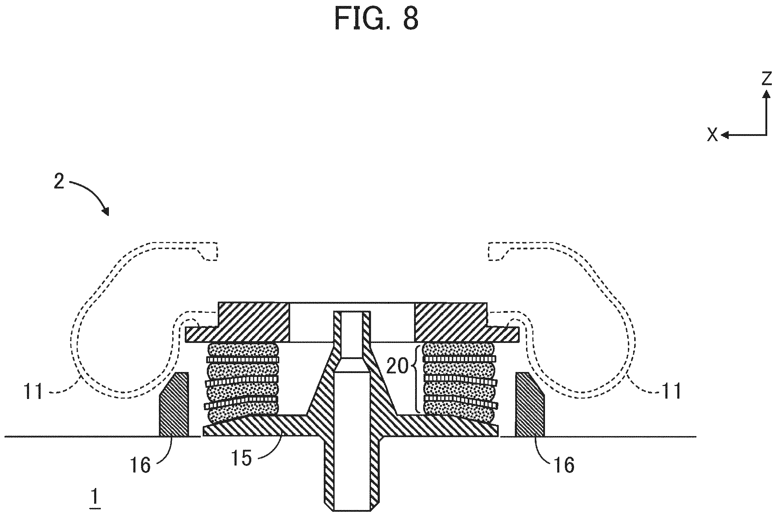

It should be noted that in the bogie for a railway vehicle 1 according to the embodiment, since the restoring force when the displacement of the elastic element 20 is large is suppressed to be small as compared with the air spring in the conventional bogie for a railway vehicle, for example, when the vibration component of the displacement is large or when the vehicle travels on a curve having a curve radius smaller than that assumed at the time of designing the vehicle, there is a concern that the longitudinal displacement of the elastic element 20 and the yaw angle displacement of the bogie become large, causing interference between the vehicle body 7 and the bogie. In order to cope with such a concern, the embodiment may be configured as shown in FIG. 8.

FIG. 8 is a diagram for showing a structural example of another form of the bogie for a railway vehicle not in accordance with the invention. In the bogie for a railway vehicle 1 shown in FIG. 8, displacement regulation stoppers 16 for regulating displacement of the elastic element 20 by a predetermined upper limit amount or more are arranged in the longitudinal direction of the elastic element 20. By providing such displacement regulation stoppers 16, the bogie for a railway vehicle 1 of FIG. 8 can prevent interference between the vehicle body 7 and the bogie even when the longitudinal displacement of the elastic element 20 and the yaw angle displacement of the bogie become larger than expected.

### (2) Second Embodiment

A second embodiment of the present invention will be described. In the second embodiment, the explanation of the same parts as those in the first embodiment will not be repeated.

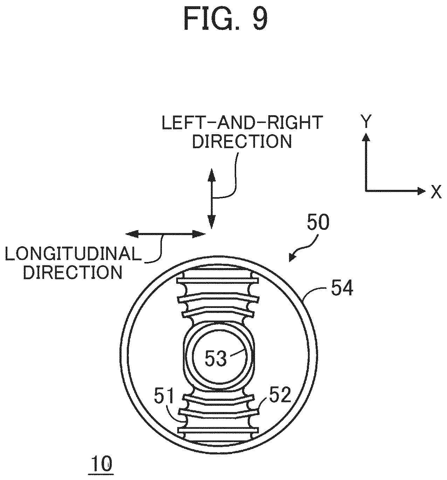

FIG. 9 is a diagram for showing a structural example of an elastic element of a bogie for a railway vehicle not in accordance with the claimed invention. A bogie for a railway vehicle 10 according to the second embodiment shown in FIG. 9 is different from the bogie for a railway vehicle 1 according to the first embodiment in that the air spring 2 includes an elastic element 50 instead of the elastic element 20 (or the elastic elements 30 and 40), but other configurations may be the same.

FIG. 9 shows a plan view of the elastic element 50 provided in the air spring 2 when viewed from the upper side. As shown in FIG. 9, the elastic element 50 includes an elastic body 51, a plate 52, an inner cylinder 53, and an outer cylinder 54.

Among these, the plate 52 is obliquely arranged in the up-and-down direction of the air spring 2 to support the load of the air spring 2 in the up-and-down direction. The inner cylinder 53 is arranged to be connected to the bogie frame 3 side of the air spring 2, and the outer cylinder 54 is arranged to be connected to the vehicle body 7 side of the air spring **2.**

In addition, the elastic element 50 is configured by stacking a plurality of elastic bodies 51 and a plurality of plates 52 in the left-and-right direction. The elastic bodies 51 are, for example, elastic bodies such as rubber. In the air spring 2 of FIG. 9, the elastic element 20 is arranged so as to be opened to the front side and the rear side with respect to the traveling direction (X-axis direction) of the railway vehicle. In the elastic element 50 thus configured, the elastic bodies 51 are elastically deformed while being compressed or extended in the vertical direction of the plates 52 when the air spring 2 is displaced in the left-and-right direction, and are elastically deformed in the shearing direction of the plates 52 when the air spring 2 is displaced in the longitudinal direction. In the elastic bodies 51 having such a configuration, when the displacement of the air spring 2 in the left-and-right direction is large, the reaction force of the elastic bodies 51 in the left-and-right direction is significantly increased, while when the displacement of the air spring 2 in the longitudinal direction is large, the reaction force of the elastic bodies 51 in the longitudinal direction is not significantly increased as compared with the reaction force in the left-and-right direction. Therefore, the elastic element 50 can be configured in such a manner that the spring constant in the longitudinal direction can be made relatively smaller than the spring constant in the left-and-right direction.

In the second embodiment, since the elastic element 50 is configured in such a manner that "the spring constant in the longitudinal direction is made smaller than the spring constant in the left-and-right direction" as described above, the same effect as that of the bogie for a railway vehicle 1 according to the first embodiment can be obtained.

As described above, the elastic element 50 in the second embodiment is deformed so that the elastic bodies 51 shear in the longitudinal direction, and when the displacement thereof is deformed to the large displacement region (see FIG. 3) larger than a predetermined amount, the restoring force in the longitudinal direction in the elastic body 50 is reduced when passing through a curve due to having a negative spring constant. Then, since the turning resistance moment is also reduced by the reduction of the restoring force in the longitudinal direction in the elastic element 50, the horizontal pressure generated when passing through a curve can finally be reduced.

Further, in the elastic element 50 in the second embodiment, when the displacement in the left-and-right direction is large, the reaction force of the elastic bodies 51 in the left-and-right direction increases, so that there is an advantage that the displacement in the left-and-right direction can be suppressed, for example, when it is necessary to regulate the displacement in the left-and-right direction when passing through a curve or when it is desired to avoid an impact or vibration caused by the collision of the vehicle body or the bogie with the left and right stoppers between the vehicle body and the bogie.

It should be noted that the present invention is not limited to the above-described embodiments, and includes various modified examples, as long as they fall within the scope of protection of the appended claims.

### List of Reference Signs

1, 10 bogie for railway vehicle
2 air spring
3 bogie frame
4 axle box
5 wheel set
6 axle spring
7 vehicle body
11 diaphragm
13 top plate
14 bottom plate
15 base plate
16 displacement regulation stopper
20, 30, 40, 50 elastic element
21, 31, 41, 42, 51 elastic body
22, 32, 43, 52 plate
53 inner cylinder
54 outer cylinder
90 bogie for railway vehicle
91 air spring
92 elastic element
F1 restoring force in the longitudinal direction
F2 turning resistance moment
F3 horizontal pressure

## Claims

1. A bogie (1) for a railway vehicle comprising an elastic element (40) that is configured to be arranged between a vehicle body (7) and a bogie frame (3) of a railway vehicle and elastically supports both,
wherein the elastic element (40) is configured in such a manner that a spring constant for displacement in the longitudinal direction in the traveling direction of the vehicle body (7) is smaller than that for displacement in the vertical direction or the left-and-right direction in the traveling direction,
wherein the elastic element (40) is configured by stacking first elastic bodies (42) and plates (43) in the vertical direction, and by stacking second elastic bodies (41) and plates (43) in the vertical direction, the second elastic bodies having a spring constant for displacement in the longitudinal direction that is larger than that of the first elastic bodies, the elastic element being configured to be opened to the front side or the rear side and the center side with respect to the traveling direction, and
wherein in the same layer between the plates (43) of the elastic element (40), the first elastic bodies (42) are arranged on each of the front side and the rear side, and the second elastic bodies (41) are arranged on the center side.

2. The bogie for a railway vehicle according to claim **1,**
wherein a stopper for regulating displacement of the elastic element to the longitudinal direction by a predetermined amount or more is arranged on the side in the longitudinal direction of the elastic element.

## Patentansprüche

1. Drehgestell (1) für ein Schienenfahrzeug, das ein elastisches Element (40) umfasst, das ausgelegt ist, um zwischen einem Wagenkasten (7) und einem Drehgestellrahmen (3) eines Schienenfahrzeugs angeordnet zu sein und beide elastisch stützt,
wobei das elastische Element (40) derart ausgelegt ist, dass eine Federkonstante für eine Verlagerung in Längsrichtung in Fahrtrichtung des Wagenkastens (7) kleiner ist als für eine Verlagerung in vertikaler Richtung oder Links-rechts-Richtung in Fahrtrichtung,
wobei das elastische Element (40) durch Stapeln erster elastischer Körper (42) und Platten (43) in vertikaler Richtung und durch Stapeln zweiter elastischer Körper (41) und Platten (43) in vertikaler Richtung konfiguriert ist, wobei die zweiten elastischen Körper eine Federkonstante für eine Verlagerung in Längsrichtung aufweisen, die größer ist als die der ersten elastischen Körper, wobei das elastische Element ausgelegt ist, um zur Vorderseite oder Hinterseite und zur Mittenseite in Bezug auf die Fahrtrichtung geöffnet zu sein, und
wobei in derselben Schicht zwischen den Platten (43) des elastischen Elements (40), die ersten elastischen Körper (42) auf der Vorderseite sowie Hinterseite angeordnet sind und die zweiten elastischen Körper (41) auf der Mittenseite angeordnet sind.

2. Drehgestell für ein Schienenfahrzeug nach Anspruch 1,
wobei ein Puffer zur Regelung der Verlagerung des elastischen Elements in Längsrichtung um ein vorbestimmtes Ausmaß oder mehr auf der Seite in Längsrichtung des elastischen Elements angeordnet ist.

## Revendications

1. Bogie (1) pour un véhicule ferroviaire comprenant un élément élastique (40) qui est configuré pour être agencé entre une caisse de véhicule (7) et un châssis de bogie (3) d'un véhicule ferroviaire, et qui supporte élastiquement les deux,
dans lequel l'élément élastique (40) est configuré de telle sorte qu'une constante de ressort pour un déplacement dans la direction longitudinale dans la direction de déplacement de la caisse de véhicule (7) soit inférieure à celle pour un déplacement dans la direction verticale ou la direction gauche-droite dans la direction de déplacement,
dans lequel l'élément élastique (40) est configuré en empilant des premiers corps élastiques (42) et des plaques (43) dans la direction verticale, et en empilant des seconds corps élastiques (41) et des plaques (43) dans la direction verticale, les seconds corps élastiques présentant une constante de ressort pour un déplacement dans la direction longitudinale qui est plus grande que celle des premiers corps élastiques, l'élément élastique étant configuré pour être ouvert vers le côté avant ou le côté arrière et le côté central par rapport à la direction de déplacement, et
dans lequel dans la même couche entre les plaques (43) de l'élément élastique (40), les premiers corps élastiques (42) sont agencés sur chacun du côté avant et du côté arrière, et les seconds corps élastiques (41) sont agencés sur le côté central.

2. Bogie pour un véhicule ferroviaire selon la revendication 1,
dans lequel une butée pour réguler un déplacement de l'élément élastique vers la direction longitudinale d'une quantité prédéterminée ou plus est agencée sur le côté dans la direction longitudinale de l'élément élastique.
